# EUROPEAN PATENT APPLICATION

(11) **EP 2 667 484 A2**
(43) Date of publication of application: **27.11.2013**
(21) Application number: 13168177.7
(22) Date of filing: 17.05.2013
(51) Int. Cl.: H02K 1/27

(54) **Rotor and motor including the rotor**

(30) Priority: 25.05.2012 JP 2012120145
(71) Applicant: JTEKT CORPORATION, Osaka-shi Osaka 542-8502 (JP)
(72) Inventor: Shibata, Yoshiyuki, Osaka-shi, Osaka 542-8502 (JP)
(74) Representative: Winter, Brandl, Fürniss, Hübner, Röss, Kaiser, Polte - Partnerschaft

(57) **Abstract**

A rotor (4) includes a rotor core (22), a plurality of embedded magnets (23) that are fixedly embedded in the rotor core (22), and end magnets (31) provided on respective axial sides of the rotor core (22). The end magnets (31) are formed by magnetizing magnetic material such that magnetic poles of the end magnets (31) are provided at such positions as to axially face magnetic path portions (33) serving as magnetic paths for magnetic fluxes of the embedded magnets (23), the magnetic fluxes passing through an outer periphery (22a) of the rotor core (22) and each magnetic pole of the end magnet (31) has the same polarity as the polarity of the magnetic pole of the embedded magnets (23), which appears in a corresponding one of the magnetic path portions (33).

## Description

### BACKGROUND OF THE INVENTION

### 1. Field of the Invention

The invention relates to a rotor and a motor including the rotor.

### 2. Discussion of Background

Japanese Patent Application Publication No. 2010-233346 (JP 2010-233346 A) describes a motor including a so-called embedded magnet-type rotor in which permanent magnets are embedded and fixed in a rotor core. In the motor including the embedded magnet-type rotor, not only magnetic torque from the permanent magnets but also reluctance torque is generated. Therefore, the motor including the embedded magnet-type rotor has an advantage over a motor including a so-called surface permanent magnet rotor in which permanent magnets are fixed onto the surface of a rotor core, that is, the motor including the embedded magnet-type rotor generates torque higher than that generated by the motor including the surface permanent magnet rotor.

In order to increase magnetic torque, it is necessary to increase the amount of magnetic fluxes that pass through the outer periphery of a rotor core (more specifically, the region of the rotor core, which faces teeth in the radial direction), in other words, it is necessary to increase the magnetic flux density at the outer periphery of the rotor core. However, in order to increase the magnetic flux density at the outer periphery of a rotor core in a conventional configuration, there has been actually no other choice but to use permanent magnets that have a larger maximum energy product. In addition, there is a limit on enhancement of performance of permanent magnets. Therefore, there has been a demand for a new technique for increasing the magnetic flux density at the outer periphery of a rotor core irrespective of the performance of permanent magnets embedded in the rotor core.

The invention provides a rotor configured to increase the magnetic flux density at the outer periphery of a rotor core, and a motor including the rotor.

According to a feature of an example of the invention, there is provided a rotor including a rotor core and a plurality of embedded magnets that are fixedly embedded in the rotor core, the rotor comprising: an end magnet that is provided at least one axial side of the rotor core, wherein magnetic poles of the end magnet are formed at such positions as to axially face magnetic path portions serving as magnetic paths for magnetic fluxes of the embedded magnets, the magnetic fluxes passing through an outer periphery of the rotor core, and each magnetic pole of the end magnet has a same polarity as a polarity of the magnetic pole of the embedded magnets, which appears in a corresponding one of the magnetic path portions.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a sectional view of a motor according to an embodiment, the sectional view being perpendicular to the axial direction of the motor;
FIG. 2 is a sectional view of the motor according to the embodiment, the sectional view being taken along the axial direction of the motor;
FIG. 3 is an exploded perspective view of a rotor according to the embodiment;
FIG. 4 is a side view of the rotor according to the embodiment, as viewed from the axial direction of the rotor;
FIG. 5 is a sectional view taken along the line A-A in FIG. 4, showing magnet fluxes of end magnets according to the embodiment;
FIG. 6A and FIG. 6B are enlarged side views of rotors according to other embodiments, as viewed from the axial directions of the rotors; and
FIG. 7 is an exploded perspective view of a rotor according to another embodiment.

### DETAILED DESCRIPTION OF EMBODIMENTS

Hereinafter, embodiments of the invention will be described with reference to the accompanying drawings.

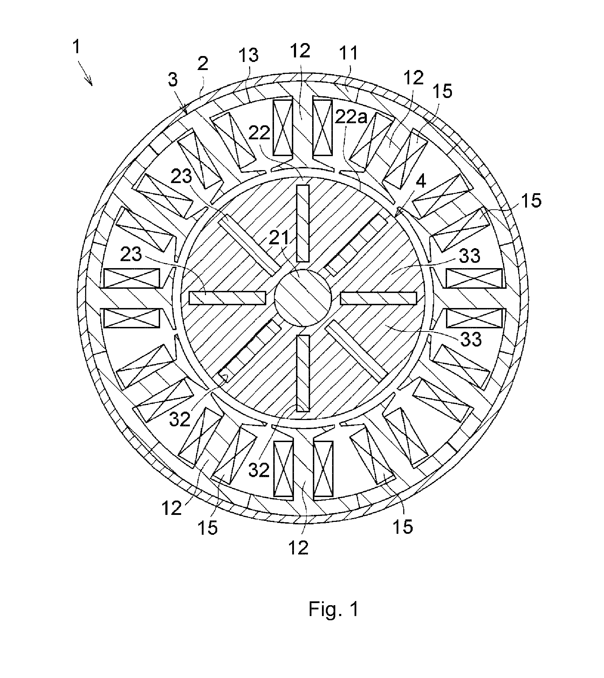

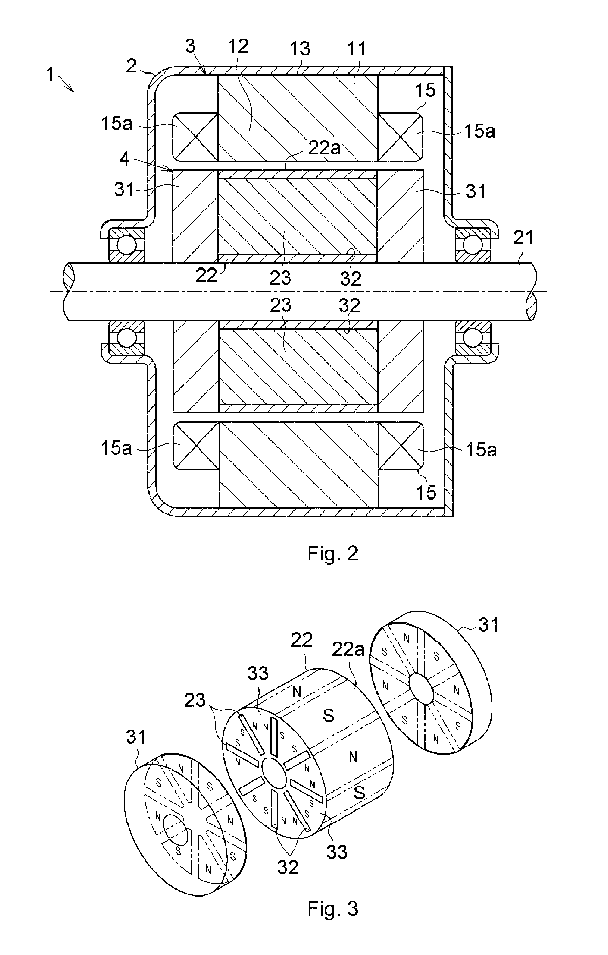

A motor 1 shown in FIG. 1 and FIG. 2 is installed in, for example, a vehicle, and used as a drive source for an electric power steering system that assists a steering operation, or as a drive source for an electric pump system that generates hydraulic pressure. As shown in FIG. 1, the motor 1 includes a stator 3 housed in a cylindrical case 2, and a rotor 4 that is arranged radially inward of the stator 3 and rotatably supported.

The stator 3 has a stator core 13 formed of a cylindrical portion 11 that is fixed to the inner periphery of the case 2, and a plurality of (twelve, in the present embodiment) teeth 12 extending radially inward from the cylindrical portion 11. Multiple (twelve, in the present embodiment) coils 15 are wound around the respective teeth 12.

The rotor 4 includes a rotary shaft 21, a cylindrical rotor core 22 that is fixed to the rotary shaft 21 so as to rotate together with the rotary shaft 21, and multiple (eight, in the present embodiment) embedded magnets 23 that are fixedly embedded in the rotor core 22. That is, the rotor 4 according to the present embodiment 4 is configured as a so-called embedded permanent magnet rotor. The rotor core 22 is formed such that the axial length of the rotor core 22 is substantially equal to the axial length of the stator core 13. Thus, as shown in FIG. 2, axial end portions 15a of the coils 15, which are located on the sides of respective axial ends of the teeth 12, are located axially outward of the rotor core 22.

In the thus-configured motor 1, the rotor 4 rotates due to magnetic attraction force and repulsion force generated between magnetic fields that are formed as drive electric power is supplied to the coils 15, and the magnetic fluxes of the embedded magnets 23.

Next, the configuration of the rotor will be described in detail. As shown in FIG. 2 and FIG. 3, the rotor 4 includes end magnets 31 that are fixed to respective axial ends of the rotor core 22, and the end magnets 31 increase the magnetic flux density at an outer periphery 22a of the rotor core 22.

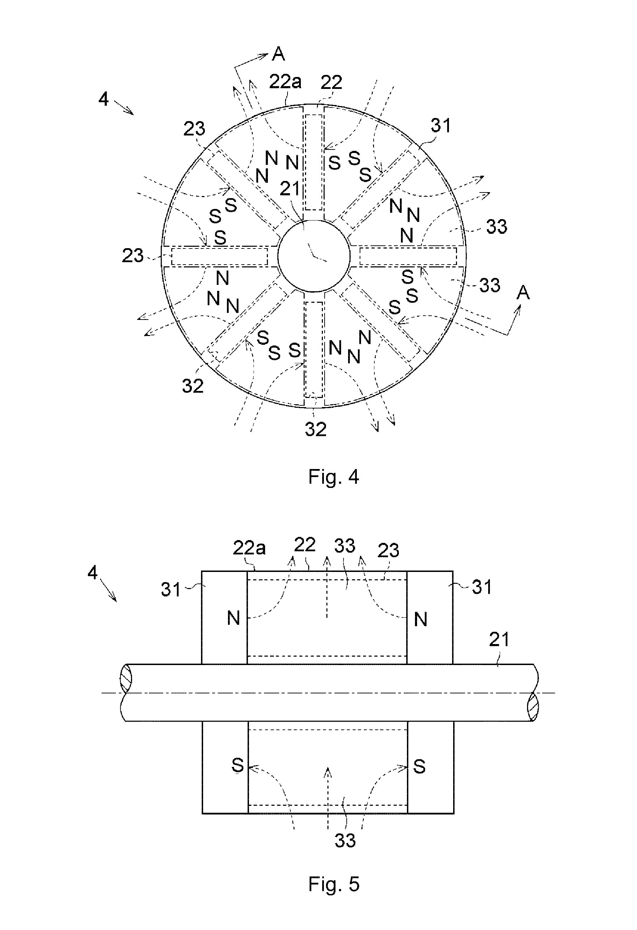

More specifically, as shown in FIG. 1 and FIG. 4, the rotor core 22 has a plurality of cavities 32 in which the embedded magnets 23 are arranged. Each of the cavities 32 is a hole that has a rectangular sectional shape, and is formed in the rotor core 22 such that that the longitudinal direction of each cavity 32 coincides with the radial direction. Each of the embedded magnets 23 is formed into a flat plate shape having a rectangular sectional shape that corresponds to the sectional shape of each cavity 32. The embedded magnets 23 are arranged in the cavities 32. That is, the embedded magnets 23 are arranged in a radial manner.

The embedded magnets 23 are formed by magnetizing magnetic material such that the north pole of each embedded magnet 23 faces the north pole of the adjacent embedded magnet 23 and the south pole of each embedded magnet 23 faces the south pole of the adjacent embedded magnet 23 in the circumferential direction and the polarities of magnetic poles (magnetic poles of the rotor), which are formed on the outer periphery 22a of the rotor core 22 by the embedded magnets 23, alternate between the north pole and the south pole in the circumferential direction. Therefore, each generally sector-shaped portion located between the adjacent cavities 32 is configured as a magnetic path portion 33 that serves as a magnetic path for the magnetic fluxes of the embedded magnets 23, which pass thorough the outer periphery 22a. In the drawings, the magnetic fluxes of the embedded magnets 23 are indicated by broken lines. As the embedded magnets 23, bonded magnets (e.g. plastic magnets, rubber magnets) are used.

Each of the end magnets 31 is formed into an annular shape, and is fitted onto the rotary shaft 21. In the present embodiment, the end magnets 31 are formed such that the outer diameter of each of the end magnets 31 is substantially equal to the outer diameter of the rotor core 22, and the inner diameter of each of the end magnets 31 is substantially equal to the inner diameter of the rotor core 22. As shown in FIG. 2, the end magnets 31 are fixed to respective axial end faces of the rotor core 22 such that the end magnets 31 face the axial end portions 15a of the coils 15 in the radial direction.

As shown in FIG. 3 and FIG. 4, magnetic poles of each end magnet 31 are formed in generally sector-shaped regions of the surface of the end magnet 31, which faces the rotor core 22. The generally sector-shaped regions face the respective magnetic path portions 33 of the rotor core 22. In the drawings, the magnetic poles of the end magnets 31 are schematically indicated by long dashed double-short dashed lines. Each magnetic pole of each end magnet 31 is formed so as to have the same polarity as the magnetic pole of the embedded magnets 23, which appears in the corresponding magnetic path portion 33. Specifically, the magnetic pole of a portion of the end magnet 31, which faces the magnetic path portion 33 that is sandwiched between the north poles of the embedded magnets 23, is the north pole, and, the magnetic pole of a portion of the end magnet 31, which faces the magnetic path portion 33 that is sandwiched between the south poles of the embedded magnets 23, is the south pole. Bonded magnets are used as the end magnets 31 in the present embodiment, and the end magnets 31 are formed by magnetizing magnetic material such that the magnetic poles appear only on the surfaces of the end magnets 31, which face the rotor core 22.

Next, an operation of the rotor according to the present embodiment will be described. As indicated by broken lines in FIG. 5, the magnet fluxes formed by the end magnets 31 pass through the outer periphery 22a of the rotor core 22 in substantially the same directions as the directions in which the magnetic fluxes of the embedded magnets 23 pass through the outer periphery 22a of the rotor core 22. That is, in addition to the magnetic fluxes formed by the embedded magnets 23, the magnetic fluxes formed by the end magnets 31 pass through the outer periphery 22a. Thus, the magnetic flux density at the outer periphery 22a of the rotor core 22 is higher than that in a configuration where only the embedded magnets 23 are provided.

As described so far, according to the present embodiment, the following advantageous effects are obtained.
(1) By fixing the end magnets 31 to respective axial ends of the rotor core 22, it is possible to increase the magnetic flux density at the outer periphery 22a of the rotor core 22 without using the embedded magnets 23 with a large maximum energy product. Therefore, magnetic torque obtained in the present embodiment is higher than that obtained in the configuration where only the embedded magnets 23 are provided. Accordingly, it is possible to easily provide a more compact and higher-powered motor 1.

(2) The end magnets 31 are fixed to the rotor core 22 so as to face, in the radial direction, the axial end portions 15a of the coils 15, which are located axially outward of the rotor core 22. Usually, the axial length of the stator core 13 is substantially equal to the axial length of the rotor core 22 as described in the present embodiment. Therefore, the axial end portions 15a of the coils 15 are located axially outward of the rotor core 22. Hence, by fixing the end magnets 31 to the rotor core 22 such that the end magnets 31 face the axial end portions 15a of the coils 15 in the radial direction, formation of wasted space in the motor 1 is prevented. Thus, an increase in the size of the motor 1 is suppressed.

(3) The embedded magnets 23 are formed into a flat plate shape and arranged in a radial manner. In addition, the embedded magnets 23 are formed by magnetizing magnetic material such that the north pole of each embedded magnet 23 faces the north pole of the adjacent embedded magnet 23 and the south pole of each embedded magnet 23 faces the south pole of the adjacent embedded magnet 23 in the circumferential direction. Thus, it is possible to increase the area of the magnetic path portions 33 as viewed from the axial direction, in other words, the area of the magnetic paths for the magnetic fluxes of the end magnets 31. Accordingly, the magnetic flux density at the outer periphery 22a of the rotor core 22 is increased effectively.

The above-described embodiment may be modified as follows.

In the above-described embodiment, bonded magnets are used as the embedded magnets 23 and the end magnets 31. However, the embedded magnets 23 and the end magnets 31 are not limited to the bonded magnets, and sintered magnets, for example, may be used.

In the above-described embodiment, each end magnet 31 is formed by magnetizing magnetic material such that the magnetic poles appear only on the rotor core 22-side portion of the end magnet 31. However, each end magnet 31 may be formed by magnetizing magnetic material such that the magnetic poles also appear on the opposite side of the end magnet 31 from the rotor core 22. In this case, by providing yokes, which are made of a soft magnetic material, on the opposite sides of each end magnet 31 from the rotor core 22, magnetic fluxes of the end magnets 31 are prevented from leaking to respective axial sides of the rotor 4.

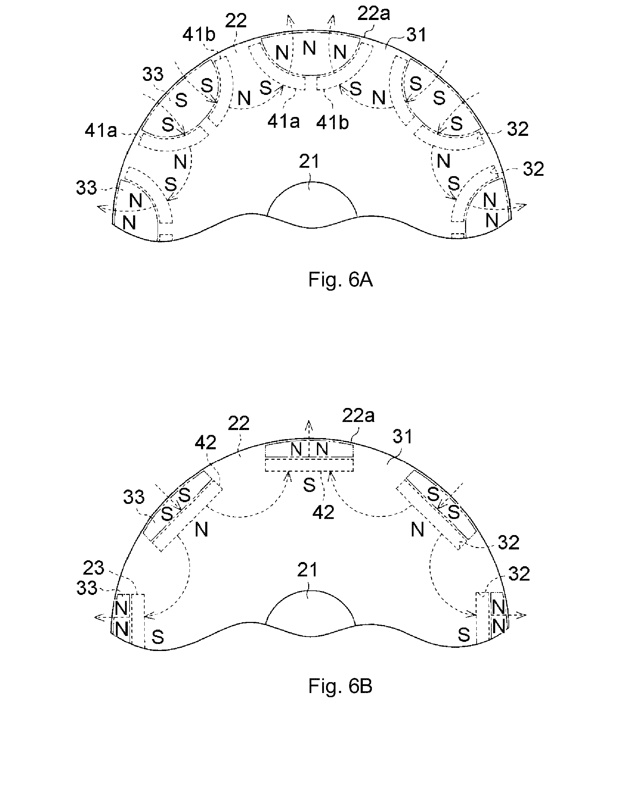

In the above-described embodiment, the multiple flat plate-shaped embedded magnets 23 are arranged in a radial manner in the rotor core 22. However, the shape and arrangement of the embedded magnets 23 are not limited to these, and may be changed as appropriate. For example, as shown in FIG. 6A, there may be used a pair of embedded magnets 41 a, 41b, which are curved into an arc plate shape and formed by magnetizing magnetic material such that the north poles of the embedded magnets 41a, 41b face each other or the south poles of the embedded magnets 41a, 41b faces each other in the circumferential direction. Then, multiple pairs of embedded magnets 41a, 41b are arranged in a circular manner. In this case, the magnetic poles of each end magnet 31 are formed at such positions as to face magnetic path portions 33 which have a generally semicircular sectional shape and which are formed in the rotor core 22 at positions between the embedded magnets 41a, 41b. Alternatively, as shown in FIG. 6B, for example, embedded magnets 42, which are formed into a flat plate shape having a rectangular sectional shape, may be arranged in a circular manner such that the longitudinal direction of each embedded magnet 42 is perpendicular to the radial direction. In this case, the magnetic poles of each end magnet 31 are formed at such positions as to face magnetic path portions 33 which have a generally semicircular sectional shape which are formed in the rotor core 22 at positions radially outward of the embedded magnets 23.

In the above-described embodiment, the end magnets 31, which are formed into an annular shape, are fixed to the rotor core 22. However, the invention is not limited to this configuration. For example, a plurality of plate-shaped end magnets 31 may be fixed at such positions as to face the magnetic path portions 33.

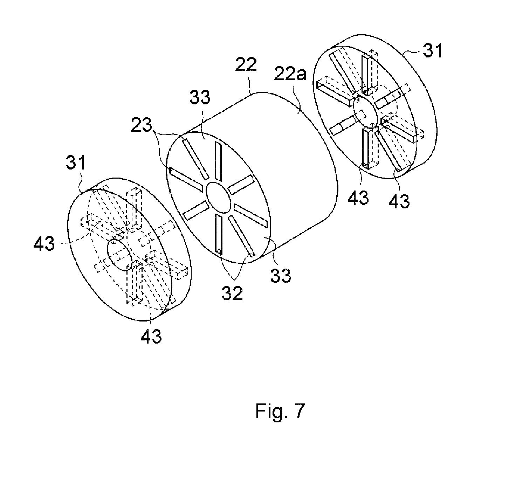

The above-described embodiment may be modified as shown in FIG. 7. That is, grooves 43 that open towards the rotor core 22 may be formed in the end magnets 31 at positions at which the grooves 43 face the embedded magnets 23.

In the above-described embodiment, the end magnets 31 are fixed to the rotor core 22 such that the end magnets 31 face the axial end portions 15a of the coils 15 in the radial direction. However, for example, the axial length of the rotor core 22 may be longer than the axial length of the stator core 13 so that the end magnets 31 do not face the axial end portions 15a of the coils 15 in the radial direction.

In the above-described embodiment, the end magnets 31 are provided on the respective axial sides of the rotor core 22. However, the end magnet 31 may be provided only on one axial end side or only on the other axial end side of the rotor core 22.

In the above-described embodiment, the invention is applied to the motor 1 that is used as a drive source for, for example, an electric power steering system. However, the invention is not limited to this, and may be applied to a drive source for another apparatus, or applied to an electric generator.

## Claims

1. A rotor including a rotor core and a plurality of embedded magnets that are fixedly embedded in the rotor core, the rotor comprising:
an end magnet that is provided at least one axial side of the rotor core, wherein
magnetic poles of the end magnet are formed at such positions as to axially face magnetic path portions serving as magnetic paths for magnetic fluxes of the embedded magnets, the magnetic fluxes passing through an outer periphery of the rotor core, and
each magnetic pole of the end magnet has a same polarity as a polarity of the magnetic pole of the embedded magnets, which appears in a corresponding one of the magnetic path portions.

2. A motor including a stator that has a stator core provided with a plurality of teeth extending radially inward, and coils wound round the teeth, and
a rotor having a rotor core arranged radially inward of the stator core, and a plurality of embedded magnets fixedly embedded in the rotor core, the motor comprising:
an end magnet that is provided at least one axial side of the rotor core, wherein
magnetic poles of the end magnet are formed at such positions as to axially face magnetic path portions serving as magnetic paths for magnetic fluxes of the embedded magnets, the magnetic fluxes passing through an outer periphery of the rotor core, and
each magnetic pole of the end magnet has a same polarity as a polarity of the magnetic pole of the embedded magnets, which appears in a corresponding one of the magnetic path portions.

3. The motor according to claim 2, wherein:
the coils are wound around the teeth such that axial end portions of the coils are located axially outward of the rotor core; and
the end magnet faces the axial end portions of the coils in a radial direction.
